# EUROPÄISCHE PATENTSCHRIFT

(11) **EP 3 936 421 B1**
(45) Veröffentlichungstag und Bekanntmachung des Hinweises auf die Patenterteilung: **30.10.2024**
(21) Anmeldenummer: 20184237.4
(22) Anmeldetag: 06.07.2020
(51) Int. Cl.: B62J 1/00

(54) **FAHRRADSATTEL**
BICYCLE SADDLE
SELLE DE VÉLO

(43) Veröffentlichungstag der Anmeldung: 12.01.2022
(73) Patentinhaber: SQlab GmbH, 82024 Taufkirchen (DE)
(72) Erfinder: Hild, Tobias, 82024 Taufkirchen (DE)
(74) Vertreter: Koelle, Alexander

(56) Entgegenhaltungen:
- EP-A1- 2 987 708
- DE-C- 341 311
- GB-A- 122 962
- KR-B1- 101 200 614
- US-A1- 2015 130 234
- US-B1- 7 121 622

## Beschreibung

### Technisches Gebiet

Die vorliegende Erfindung betrifft einen Fahrradsattel, welcher an einem Fahrrad, insbesondere an einem Fahrradrahmen eines Fahrrads befestigbar ist, mit einer Fahrradsattelschale, einer Dämpfungsschicht und einer Mehrzahl von Tapeelementen, sowie ein Verfahren zum Herstellen eines Fahrradsattels, sowie die Verwendung von Tapeelementen zur ergonomischen Anpassung eines Fahrradsattels an eine Anatomie eines Fahrradfahrers und zum Schutz eines elastischen Materials einer Dämpfungsschicht des Fahrradsattels sowie zum Ausgleichen und Kaschieren der Unebenheiten der Oberfläche der Dämpfungsschicht.

### Stand der Technik

Es ist bekannt, dass ein herkömmlicher Fahrradsattel eine Fahrradsattelschale aufweist, die aus einem harten, widerstandsfähigen Material geformt ist, um das Gewicht des auf dem entsprechenden Fahrradsattel sitzenden Fahrradfahrers aufzunehmen.

Um ein ergonomisch vorteilhaftes Sitzen des Fahrradfahrers auf einem entsprechenden Fahrradsattel sicherzustellen, weist ein herkömmlicher Fahrradsattel üblicherweise eine Dämpfungsschicht aus einem weichen Material auf, welche auf der Fahrradsattelschale angebracht ist, und welche eine angenehme Auflage des Gesäßes des Fahrradfahrers auf dem Fahrradsattel ermöglicht.

Ferner ist bekannt, dass ein herkömmlicher Fahrradsattel insbesondere einen Fahrradsattelbezug aufweisen kann, welcher auf der auf der Fahrradsattelschale angebrachten Dämpfungsschicht angeordnet ist, um einen wirksamen Schutz der Dämpfungsschicht sicherzustellen.

Bei einem herkömmlichen Fahrradsattel besteht oftmals das Problem, dass die Dämpfungsschicht üblicherweise eine standardisierte Form aufweist, welche insbesondere nicht an die spezifischen Gesäßkonturen von einzelnen Fahrradfahrern angepasst ist, so dass ein ergonomisch optimierter Sitzkomfort beim Sitzen auf dem Fahrradsattel nicht immer gewährleistet werden kann.

Ein weiteres Problem bei einem herkömmlichen Fahrradsattel ist, dass besonders in Bereichen der Dämpfungsschicht, in denen ein Großteil der durch das Sitzen des Fahrradfahrers auf dem Fahrradsattel vermittelten Kraft eingeleitet wird, bei einer dauerhaften Beanspruchung die Dämpfungsschicht und das in der Dämpfungsschicht aufgenommene Material beschädigt werden kann.

Die EP 3 441 291 A1 offenbart einen ergonomischen Fahrradsattel zur Druckentlastung der Sitzknochen. Weitere Fahrradsättel zur Druckentlastung der Sitzknochen sind aus der DE 20 2004 014 467 U1, DE 20 2005 013 749 U1, DE 20 2007 008 321 U1 bzw. EP 2 003 046 B1, EP 2 965 974 A1 sowie DE 20 2016 005 063 U1 bzw. EP 3 284 663 B1 bekannt.

Die Druckschrift KR 101 200 614 A offenbart einen gattungsgemäßen Fahrradsattel mit einem aus Gummi bestehenden Sitzpolster, welches auf der Oberseite des Fahrradsattelrahmens angeordnet ist.

Die Druckschrift US 2015/130234 A1 offenbart einen Fahrradsattel mit einer Fahrradsattelschale, auf welcher eine Schaumstoffschicht aufgebracht ist, auf welcher wiederum eine Substratschicht aufgebracht ist, und auf welcher wiederum ein aus drei Schichten bestehender Sattelüberzug aufgebracht ist.

Die Druckschrift EP 2 987 708 A1 offenbart einen Überzug für einen Fahrradsattel, wobei der Überzug eine Grundschicht aus einem ersten Kunststoffmaterial mit einem ersten Reibungskoeffizienten und eine auf der Grundschicht angeordnete Hilfsschicht aus einem zweiten Kunststoffmaterial mit einem zweiten Reibungskoeffizienten aufweist.

Die Druckschrift US 7 121 622 B1 offenbart einen Fahrradsattel mit einem Rahmenaufhängungssystem, einem Sitzbereich mit einer zentralen Öffnung und einem anpassbaren Nasenbereich, welcher von dem Sitzbereich beabstandet ist.

Die Druckschrift DE 341 311 C offenbart einen Fahrradsattel mit einer Satteldecke aus einem vulkanisierbaren Material.

Die Druckschrift GB 122 962 A offenbart einen Fahrradsattel, welcher eine Satteloberfläche aus einem Komposit-Material aufweist.

### Offenlegung der Erfindung

Die vorliegende Erfindung stellt sich zur Aufgabe, einen Fahrradsattel mit einer Dämpfungsschicht bereitzustellen, welche ergonomisch an eine Anatomie des Fahrradfahrers, insbesondere an eine Gesäßkontur des Fahrradfahrers, angepasst ist, und welche einen wirksamen Schutz des elastischen Materials der Dämpfungsschicht bereitstellt, insbesondere wenn die Dämpfungsschicht aus E-TPU besteht sowie dass die Unebenheiten in der Oberfläche der Dämpfungsschicht, insbesondere bei Verwendung von E-TPU, ausgeglichen und kaschiert werden.

Die Aufgabe der Erfindung wird gemäß einem ersten Aspekt durch den Fahrradsattel nach Anspruch 1, gemäß einem zweiten Aspekt durch das Verfahren nach Anspruch 13, und gemäß einem dritten Aspekt durch die Verwendung nach Anspruch 14 gelöst. Die abhängigen Ansprüche beanspruchen bevorzugte Ausführungsformen.

Gemäß einem ersten Aspekt der vorliegenden Erfindung wird die vorliegende Aufgabe durch einen Fahrradsattel gelöst, welcher an einem Fahrrad, insbesondere an einem Fahrradrahmen eines Fahrrads befestigbar ist, umfassend eine Fahrradsattelschale, eine Dämpfungsschicht, welche an der Fahrradsattelschale befestigt ist, wobei die Dämpfungsschicht ein elastisches Material umfasst, welches ausgebildet ist, auf den Fahrradsattel wirkende Kräfte durch eine Verformung des elastischen Materials aufzunehmen, und eine Mehrzahl von Tapeelementen, welche abschnittsweise an der Dämpfungsschicht durch eine stoffschlüssige Verbindung befestigt sind, um eine ergonomische Anpassung des Fahrradsattels an eine Anatomie eines Fahrradfahrers und einen Schutz des elastischen Materials der Dämpfungsschicht sicherzustellen sowie ggf. die Unebenheiten in der Dämpfungsschicht auszugleichen und zu kaschieren.

Die Dämpfungsschicht, welche ein elastisches Material umfasst, ist ausgebildet, die auf den Fahrradsattel wirkenden Kräfte durch eine Verformung des elastischen Materials aufzunehmen, um somit ein angenehmes Sitzen des Fahrradfahrers auf dem Fahrradsattel zu ermöglichen. Insbesondere ist die Form der Dämpfungsschicht, insbesondere die Struktur des elastischen Materials an das Gesäß, insbesondere die Gesäßkontur, des Fahrradfahrers angepasst. Insbesondere umfasst das elastische Material ein geschäumtes Material, insbesondere einen festen, geschlossenporigen Schaum.

Insbesondere umfasst das elastische Material der Dämpfungsschicht ein thermoplastisches Polyurethan (TPU), insbesondere ein expandiertes thermoplastisches Polyurethan (E-TPU), z.B. Infinergy^{®} der Fa. BASF, ein thermoplastisches Elastomer (TPE), insbesondere ein Polyether-Block-Polyamid, z.B. PEBAX^{®} der Fa. Arkema, ein thermoplastisches Elastomer-Vulkanisat (TPE-V), Polyurethan (PU), Ethylen-Vinylacetat-Copolymer (EVA), ein thermoplastisches Styrol-Blockcopolymer (TPS), insbesondere ein expandiertes thermoplastisches Styrol-Blockcopolymer (E-TPS) und/oder Polystyrol (PS), insbesondere expandiertes Polystyrol (EPS).

Die Fahrradsattelschale ist insbesondere mit einer Sattelstange verbunden, welche eine physische Verbindung zwischen dem Fahrradsattel und dem Fahrrad, insbesondere dem Fahrradrahmen, sicherstellt.

Insbesondere umfasst die Fahrradsattelschale üblicherweise ein widerstandsfähiges und hartes Kunststoffmaterial, wie z.B. einen Thermoplast-Kunststoff oder einen Carbon-Thermoplast-Verbundstoff, und stellt die strukturelle Stabilität des Fahrradsattels sicher, wodurch eine wirksame Aufnahme des Gewichts des Fahrradfahrers sichergestellt wird.

Durch die Mehrzahl, der an der Dämpfungsschicht stoffschlüssig befestigten Tapeelemente kann zumindest in bestimmten Abschnitten bzw. Bereichen die Oberfläche der Dämpfungsschicht an die Anatomie des Fahrradfahrers, insbesondere an die Gesäßkontur des Fahrradfahrers angepasst werden.

Die Tapeelemente beeinflussen insbesondere die Härte der Dämpfungsschicht. Das Material und die Dicke der Tapeelemente, und insbesondere die Anzahl der insbesondere übereinander angeordneten Tapeelemente bestimmen hierbei die Härte der Dämpfungsschicht und damit die Einsinktiefe der Sitzknochen des Gesäßes des Fahrradfahrers. Vorzugsweise befinden sich an den direkten Kontaktflächen zwischen der Dämpfungsschicht und den Sitzknochen des Gesäßes des Fahrradfahrers mehrere Lagen von Tapeelementen übereinander bzw. sind insbesondere mehrere Lagen einer Zwischenschicht zwischen den Tapeelementen und der Dämpfungsschicht angeordnet.

Somit kann durch die Tapeelemente eine ergonomisch optimierte Sitzfläche für den Fahrradfahrer auf dem Fahrradsattel sichergestellt werden. Ferner wird durch die Tapeelemente erreicht, dass die Unebenheiten in der Oberfläche der Dämpfungsschicht auf der dem Fahrradfahrer zugewandten Seite, also der Satteloberseite, kaschiert und ausgeglichen werden, insbesondere wenn die Dämpfungsschicht aus E-TPU besteht.

Ein Fahrradsattel gemäß der vorliegenden Offenbarung weist eine Mehrzahl von Tapeelementen auf, welche an der Dämpfungsschicht insbesondere in unterschiedlichen Bereichen des Fahrradsattels befestigt sind.

Insbesondere weist der Fahrradsattel einen hinteren Bereich auf, wobei insbesondere hintere Tapeelemente an der Dämpfungsschicht in dem hinteren Bereich des Fahrradsattels befestigt sind.

Insbesondere weist der Fahrradsattel im Bereich der Sattelnase einen vorderen Bereich auf, wobei insbesondere zumindest ein vorderes Tapeelement an der Dämpfungsschicht in dem vorderen Bereich des Fahrradsattels befestigt ist.

Insbesondere weist der Fahrradsattel im Bereich zwischen dem hinteren Bereich und dem vorderen Bereich einen mittleren Bereich auf, wobei insbesondere mittlere Tapeelemente an der Dämpfungsschicht in dem mittleren Bereich des Fahrradsattels befestigt sind.

An der Sattelnase des Fahrradsattels befindet sich insbesondere nur eine Lage von Tapeelementen, insbesondere eine Lage einer Zwischenschicht.

In einer Ausnehmung der Dämpfungsschicht, insbesondere Schambeinausnehmung bzw. Dammausnehmung, ist es insbesondere vorteilhaft keine Tapeelemente anzuordnen und diesen Bereich freizulassen.

Insbesondere bei einem Stufensattel, insbesondere bei einem Doppelstufensattel, besteht die Gefahr des Abrutschens des Fahrradfahrers nach vorne in Richtung der Sattelnase des Fahrradsattels. Daher muss bei einem Stufensattel, insbesondere einem Doppelstufensattel, zwischen den hinteren und mittleren Tapeelementen jeweils ein Spalt hinter der Auflage der Sitzknochen auf den mittleren Tapeelementen vorhanden sein, um ein Einsinken des Tapeelements in die Dämpfungsschicht zu ermöglichen, während vor der Auflage der Sitzknochen auf den mittleren Tapeelementen die Tapeelemente insbesondere bis zur Sattelnase ohne Unterbrechung verlaufen können. Dadurch wird die Gefahr des Abrutschens des Gesäßes des Fahrradfahrers nach vorne in Richtung der Sattelnase minimiert bzw. deutlich reduziert.

Zudem stellt die Mehrzahl der an der Dämpfungsschicht stoffschlüssig befestigten Tapeelemente zumindest in bestimmten Abschnitten bzw. Bereichen einen wirksamen Schutz der Dämpfungsschicht vor Beschädigung, z.B. Abrieb sicher, so dass das in der Dämpfungsschicht vorhandene elastische Material auch bei einer dauerhaften Nutzung des Fahrradsattels vorteilhaft geschützt ist und Unebenheiten in der Oberfläche der Dämpfungsschicht vorteilhaft ausgeglichen und kaschiert werden.

Die Tapeelemente können insbesondere als strukturelle definierte Tapebereiche geformt sein, welche insbesondere einzeln ausgeschnitten, an der Dämpfungsschicht des Fahrradsattels stoffschlüssig befestigt sind. Alternativ können die Tapeelemente jedoch auch klassische Tapebänder umfassen, welche insbesondere nebeneinander und/oder übereinander auf der Dämpfungsschicht aufgebracht sind.

Insbesondere können die Tapeelemente ein Gewebe aufweisen, um die Stabilität der Tapeelemente zu erhöhen. Insbesondere können die Tapeelemente ein Gewebeband oder Isolierband umfassen.

Insbesondere weisen die Tapeelemente eine Tapeunterseite, insbesondere eine klebende Tapeunterseite, auf, welche stoffschlüssig abschnittsweise an der Dämpfungsschicht befestigt ist.

Insbesondere weisen die Tapeelemente eine der Dämpfungsschicht abgewandte Tapeoberseite, insbesondere eine nicht-klebende Tapeoberseite, auf, wobei insbesondere ein Gesäß des Fahrradfahrers auf der Tapeoberseite sitzt.

Insbesondere umfassen die Tapeelemente herkömmliche bei Fahrradsätteln üblicherweise verwendete Materialien, umfassend echtes Leder, Kunstleder, Mikrofasermaterial, und andere Materialien. Insbesondere umfasst das Material der Tapeelemente Polyurethan (PU). Polyurethan (PU) stellt insbesondere an der höchsten Stelle der Oberfläche des Fahrradsattels einen vorteilhaften Halt für das Gesäß des Fahrradfahrers bereit, so dass ein Abrutschen des Gesäßes nach hinten verhindert wird. Polyurethan (PU) stellt ferner, insbesondere in mehreren Lagen übereinander, im Bereich der anliegenden Sitzknochen des Gesäßes des Fahrradfahrers einen vorteilhaften Sitz sicher.

Insbesondere umfassen die Tapeelemente ein strukturiertes Gewebe, insbesondere mit einer aufgerauten Oberfläche, wodurch ein Abrutschen des Gesäßes nach vorne verhindert wird, und gleichzeitig, wenn es seitlich der Sattelnase angebracht ist, insbesondere versetzt, insbesondere um 90° zur Geweberichtung versetzt, an den Sitzknochen des Gesäßes des Fahrradfahrers anliegt, und damit insbesondere richtungsselektiv rutschhemmend wirkt. Das Material der Tapeelemente umfasst hierbei insbesondere ein sog. Interlock-Material.

In einer Ausführungsform weist die Dämpfungsschicht eine Oberseite auf, welche einem Gesäß eines auf dem Fahrradsattel sitzenden Fahrers zugewandt ist, wobei die Dämpfungsschicht einen die Oberseite begrenzenden Schichtrand aufweist, wobei die Tapeelemente an der Oberseite angeordnet sind und sich insbesondere zumindest abschnittsweise über den Schichtrand erstrecken.

Dadurch wird der technische Vorteil erreicht, dass die an der Oberseite der Dämpfungsschicht befestigten Tapeelemente einen besonders wirksamen und ergonomisch optimierten Kontakt zwischen der Dämpfungsschicht und dem Gesäß des Fahrradfahrers sicherstellen. Insbesondere ist die Oberseite als eine gekrümmte Oberseite ausgebildet, wobei die Tapeelemente an der gekrümmten Oberseite befestigt sind.

In einer Ausführungsform sind die Tapeelemente mit der Dämpfungsschicht, insbesondere mit einer Oberseite und/oder einem Schichtrand der Dämpfungsschicht verklebt, insbesondere durch einen heißschmelzenden Klebstoff.

Dadurch wird der technische Vorteil erreicht, dass durch ein Verkleben der Tapeelemente mit der Dämpfungsschicht eine einfach herzustellende und besonders widerstandfähige Verbindung zwischen den Tapeelementen und der Dämpfungsschicht bereitgestellt werden kann.

Wird insbesondere ein heißschmelzender Klebstoff verwendet, kann ein entsprechendes Aufbringen der Tapeelemente auf die Dämpfungsschicht besonders einfach und vorteilhaft, insbesondere automatisiert, durchgeführt werden.

In einer Ausführungsform weisen die Tapeelemente jeweils eine der Dämpfungsschicht zugewandte Tapeunterseite auf, welche mit der Dämpfungsschicht stoffschlüssig verbunden, insbesondere verklebt, ist, und weisen die Tapeelemente jeweils eine Tapeoberseite auf, welche der Dämpfungsschicht abgewandt ist.

Dadurch wird der technische Vorteil erreicht, dass durch die Tapeunterseite der Tapeelemente eine wirksame Befestigung der Tapeelemente an der Dämpfungsschicht sichergestellt werden kann, und dass durch die Tapeoberseite die Tapeelemente derart vorteilhaft ausgebildet sind, dass der Fahrradfahrer, mit dem Gesäß, besonders vorteilhaft auf der Tapeoberseite sitzen kann. Ferner wird dadurch der weitere Vorteil erreicht, dass durch die Tapeelemente die Unebenheiten der Oberfläche der Dämpfungsschicht, insbesondere wenn diese aus E-TPU besteht, kaschiert und ausgeglichen werden.

Insbesondere sind zumindest einige der Tapeelemente übereinander oder zumindest abschnittsweise überlappend an der Dämpfungsschicht angeordnet.

Dadurch wird der technische Vorteil erreicht, dass eine zumindest abschnittsweise überlappende bzw. übereinander Anordnung der Tapeelemente die Dicke der Tapeelemente erhöht, wodurch die Stabilität verbessert werden kann und der Sitzkomfort für den Fahrradfahrer verbessert und optimiert werden kann.

In einer Ausführungsform weist eine der Dämpfungsschicht abgewandte Tapeoberseite der Tapeelemente eine zumindest abschnittsweise aufgeraute Oberflächenstruktur auf, um ein Abrutschen des Gesäßes des Fahrradfahrers von der Tapeoberseite zu erschweren.

Dadurch wird der technische Vorteil erreicht, dass durch die aufgeraute Oberflächenstruktur ein besonders stabiler Sitz des Gesäßes des Fahrradfahrers auf der Tapeoberseite der Tapeelemente sichergestellt wird.

Erfindungsgemäß umfassen die Tapeelemente eine erste Gruppe von Tapeelementen mit einer ersten Steifigkeit, und umfassen die Tapeelemente eine zweite Gruppe von Tapeelementen mit einer zweiten Steifigkeit, wobei die erste Steifigkeit größer als die zweite Steifigkeit ist.

Dadurch wird der technische Vorteil erreicht, dass durch die unterschiedlichen Steifigkeiten der an der Dämpfungsschicht angeordneten Tapeelemente unterschiedlich steife Bereiche an der Oberfläche der Dämpfungsschicht geschaffen werden können, welche einen vorteilhaft ergonomischen Sitz des Fahrradfahrers auf dem Fahrradsattel ermöglichen.

In einer Ausführungsform umfasst die Dämpfungsschicht einen ersten Dämpfungsunterbereich, insbesondere einen ersten hinteren Dämpfungsunterbereich, und umfasst die Dämpfungsschicht einen zweiten Dämpfungsunterbereich, insbesondere einen zweiten hinteren Dämpfungsunterbereich, wobei die Tapeelemente, an dem ersten und/oder zweiten Dämpfungsunterbereich befestigt sind.

Dadurch wird der technische Vorteil erreicht, dass im hinteren Bereich Fahrradsattels ein ergonomisch besonders vorteilhaft optimierter Sitz sichergestellt wird.

Insbesondere ist zumindest ein hinteres Tapeelement an dem ersten und/oder zweiten hinteren Dämpfungsunterbereich befestigt.

In einer Ausführungsform umfasst die Dämpfungsschicht einen dritten Dämpfungsunterbereich, insbesondere ein Sattelnasenauflageelement, welcher insbesondere von dem ersten und/oder zweiten Dämpfungsunterbereich, insbesondere ersten und/oder zweiten hinteren Dämpfungsunterbereich beabstandet ist, wobei die Tapeelemente insbesondere nicht an dem dritten Dämpfungsunterbereich, insbesondere Sattelnasenauflageelement, befestigt sind.

Dadurch wird der technische Vorteil erreicht, dass an dem dritten Dämpfungsunterbereich, insbesondere Sattelnasenauflageelement, kein Tapeelement angebracht sein muss, da in diesem Bereich kein direkter Kontakt zwischen dem Fahrradsattel und dem Gesäß des Fahrradfahrers auftritt.

In einer Ausführungsform umfasst die Dämpfungsschicht einen vierten Dämpfungsunterbereich, insbesondere Steißbeindämpfungsbereich, welcher sich zwischen dem ersten und zweiten Dämpfungsunterbereich erstreckt, und wobei die Tapeelemente an dem vierten Dämpfungsunterbereich befestigt sind.

Dadurch wird der technische Vorteil erreicht, dass der vierte Dämpfungsunterbereich, insbesondere Steißbeindämpfungsbereich, einen vorteilhaft gedämpften Kontakt zwischen dem Steißbein des Fahrradfahrers und dem Fahrradsattel sicherstellt.

In einer Ausführungsform umfasst die Dämpfungsschicht einen fünften Dämpfungsunterbereich, insbesondere fünften mittleren Dämpfungsunterbereich, und einen sechsten Dämpfungsunterbereich, insbesondere sechsten mittleren Dämpfungsunterbereich, wobei sich der fünfte Dämpfungsunterbereich insbesondere von dem ersten Dämpfungsunterbereich, insbesondere ersten hinteren Dämpfungsunterbereich, zu dem dritten Dämpfungsunterbereich, insbesondere Sattelnasenauflageelement, erstreckt, und wobei sich der sechste Dämpfungsunterbereich insbesondere von dem zweiten Dämpfungsunterbereich, insbesondere zweiten hinteren Dämpfungsunterbereich, zu dem dritten Dämpfungsunterbereich, insbesondere Sattelnasenauflageelement, erstreckt, und wobei die Tapeelemente, an dem fünften und/oder sechsten Dämpfungsunterbereich befestigt sind.

Dadurch wird der technische Vorteil erreicht, dass durch die sich von dem ersten und zweiten hinteren Dämpfungsunterbereich jeweils zu dem Sattelnasenauflageelement erstreckenden fünften und sechsten Dämpfungsunterbereich eine besonders wirksame Dämpfung der Kontaktfläche zwischen dem Fahrradsattel und dem Gesäß des Fahrradfahrers sichergestellt wird.

Insbesondere ist zumindest ein mittleres Tapeelement an dem fünften und/oder sechsten mittleren Dämpfungsunterbereich befestigt.

Insbesondere ist der fünfte mittlere Dämpfungsunterbereich durch einen Spalt von dem ersten hinteren Dämpfungsunterbereich und ist der sechste mittlere Dämpfungsunterbereich durch einen Spalt von dem zweiten hinteren Dämpfungsunterbereich getrennt. Der Spalt stellt eine wirksame Auflage der Sitzknochen des Gesäßes des Fahrradfahrers auf dem fünften und sechsten mittleren Dämpfungsunterbereich sicher und verhindert ein Abrutschen des Gesäßes nach vorne in Richtung der Sattelnase, da durch den Spalt ein Einsinken des fünften und sechsten mittleren Dämpfungsunterbereichs in die Dämpfungsschicht ermöglicht wird.

In einer Ausführungsform umfasst die Dämpfungsschicht eine Ausnehmung, insbesondere eine Schambeinausnehmung bzw. Dammausnehmung, welche insbesondere zwischen dem ersten, zweiten, dritten, vierten, fünften und/oder sechsten Dämpfungsunterbereich angeordnet ist, wobei die Tapeelemente insbesondere, nicht in der Ausnehmung, insbesondere Schambeinausnehmung bzw. Dammausnehmung, befestigt sind.

Dadurch wird der technische Vorteil erreicht, dass die Ausnehmung, insbesondere Schambeinausnehmung bzw. Dammausnehmung, ein besonders angenehmes ergonomisches Sitzen auf dem Fahrradsattel ermöglicht, weil dadurch der Druck auf das Schambein bei der Frau bzw. den Dammbereich beim Mann stark reduziert wird.

In einer Ausführungsform umfasst der Fahrradsattel ferner zumindest eine Zwischenschicht, welche zumindest abschnittsweise zwischen der Dämpfungsschicht und den Tapeelementen angeordnet ist, wobei die Zwischenschicht insbesondere mit der Dämpfungsschicht stoffschlüssig verbunden ist, und wobei die Tapeelemente insbesondere mit der Zwischenschicht stoffschlüssig verbunden sind.

Dadurch wird der technische Vorteil erreicht, dass das zumindest abschnittsweise Anbringen der Zwischenschicht zwischen der Dämpfungsschicht und den Tapeelementen eine Verdickung an der Oberseite der Dämpfungsschicht bewirkt wird, welche vorteilhaft ist, um bei besonders Druck-beanspruchten Bereichen an der Oberseite der Dämpfungsschicht eine ergonomisch optimiertes Sitzen des Fahrradfahrers auf der Dämpfungsschicht bzw. den Tapeelementen sicherzustellen.

Insbesondere umfasst die zumindest eine Zwischenschicht eine einzige Zwischenschicht, welche zumindest abschnittsweise zwischen der Dämpfungsschicht und den Tapeelementen angeordnet ist, wobei die Zwischenschicht insbesondere mit der Dämpfungsschicht stoffschlüssig verbunden ist, und wobei die Tapeelemente insbesondere mit der Zwischenschicht stoffschlüssig verbunden sind.

Insbesondere umfasst die zumindest eine Zwischenschicht eine Mehrzahl von Zwischenschichten, welche zumindest abschnittsweise zwischen der Dämpfungsschicht und den Tapeelementen angeordnet sind, wobei eine der Mehrzahl von Zwischenschichten insbesondere mit der Dämpfungsschicht stoffschlüssig verbunden ist, wobei die Tapeelemente insbesondere mit einer anderen der Mehrzahl von Zwischenschichten stoffschlüssig verbunden sind, und wobei insbesondere die Mehrzahl der Zwischenschichten jeweils miteinander stoffschlüssig verbunden sind.

In einer Ausführungsform ist die Zwischenschicht an dem ersten, zweiten, dritten, vierten, fünften und/oder sechsten Dämpfungsunterbereich befestigt, wobei die Zwischenschicht insbesondere nicht an der Ausnehmung befestigt ist.

Dadurch wird der technische Vorteil erreicht, dass die Zwischenschicht an den Bereichen der Dämpfungsschicht zwischen der Dämpfungsschicht und den Tapeelementen angebracht wird, an denen eine besonders große Kraft durch ein Sitzen des Fahrradfahrers auf die Oberseite der Dämpfungsschicht wirkt.

In einer Ausführungsform ist die Zwischenschicht als eine durchgehende Zwischenschicht ausgebildet ist, oder weist die Zwischenschicht mehrere voneinander getrennte Zwischenschichtflächen aufweist, wobei die voneinander getrennten Zwischenschichtflächen, insbesondere eine erste Zwischenschichtfläche umfasst, welche an dem ersten Dämpfungsunterbereich befestigt ist, und/oder insbesondere eine zweite Zwischenschichtfläche umfasst, welche an dem zweiten Dämpfungsunterbereich befestigt ist, und/oder insbesondere eine dritte Zwischenschichtfläche umfasst, welche an dem dritten Dämpfungsunterbereich befestigt ist, und/oder insbesondere eine vierte Zwischenschichtfläche umfasst welche an dem fünften Dämpfungsunterbereich befestigt ist, und/oder insbesondere eine fünfte Zwischenschichtfläche umfasst welche an dem sechsten Dämpfungsunterbereich befestigt ist.

Dadurch wird der technische Vorteil erreicht, dass eine durchgehende Zwischenschicht besonders einfach zu fertigen und besonders einfach auf die Oberseite der Dämpfungsschicht aufgebracht werden, wohingegen einzelne voneinander getrennte Zwischenschichtflächen eine besonders vorteilhafte und individuelle Anpassung an die jeweiligen Dämpfungsunterbereiche ermöglichen und eine individuelle Anpassung jeweiligen Dämpfungsunterbereiche an die Bedürfnisse des Fahrradfahrers ermöglichen.

Insbesondere greift die erste, zweite, dritte, vierte, fünfte und/oder sechste Zwischenschichtfläche über einen eine Oberseite der Dämpfungsschicht begrenzenden Schichtrand.

Gemäß einem zweiten Aspekt der vorliegenden Erfindung wird die vorliegende Aufgabe durch ein Verfahren zum Herstellen eines Fahrradsattels gelöst, wobei das Verfahren die folgenden Schritte umfasst: Bereitstellen einer Mehrzahl von Tapeelementen, Automatisiertes Anbringen, insbesondere durch einen Roboter, der Mehrzahl von Tapeelementen auf eine Dämpfungsschicht eines Fahrradsattels, wobei die Dämpfungsschicht ein elastisches Material umfasst, welches ausgebildet ist, auf den Fahrradsattel wirkende Kräfte durch eine Verformung des elastischen Materials aufzunehmen, und Befestigen der Dämpfungsschicht auf einer Fahrradsattelschale eines Fahrradsattels, um den Fahrradsattel herzustellen

Dadurch wird der technische Vorteil erreicht, dass ein besonders vorteilhaftes Herstellungsverfahren zum Anbringen der Mehrzahl von Tapeelementen auf dem Fahrradsattel ermöglicht wird, welches insbesondere mit einem hohem Durchsatz und einer hohen Präzision entsprechende Fahrradsättel herstellen kann.

Insbesondere wird das automatisierte Anbringen der Mehrzahl von Tapeelementen auf der Dämpfungsschicht eines Fahrradsattels durch einen Roboter durchgeführt.

Hierbei umfasst das automatisierte Anbringen der Mehrzahl von Tapeelementen insbesondere die folgenden Verfahrensunterschritte.

In einem ersten Verfahrensunterschritt des automatisierten Anbringens erfasst eine Kamera des Roboters die auf einer Fläche angeordnete Mehrzahl von Tapeelementen, welche eine zum Anbringen auf die Dämpfungsschicht gewünschte Form aufweisen, und welche an ihrer jeweiligen Tapeunterseite mit einem heißschmelzenden Klebstoff beschichtet sind.

Insbesondere sind die Tapeelemente in einem vorangegangenen Schritt aus einem Tapeelementevorläufer in der gewünschten Form ausgeschnitten worden.

In einem zweiten Verfahrensunterschritt des automatisierten Anbringens nimmt ein beweglicher Roboterarm des Roboters die Tapeelemente auf, insbesondere durch Erzeugen eines Vakuums an der Kontaktfläche zwischen dem Roboterarm und den Tapeelementen.

In einem dritten Verfahrensunterschritt des automatisierten Anbringens führt der bewegliche Roboterarm die aufgenommenen Tapeelemente zu einer Wärmquelle, insbesondere einer Infrarot-Quelle, um den an der Tapeunterseite der Tapeelemente aufgetragenen heißschmelzenden Klebstoff durch Zuführen von Wärme zu schmelzen.

In einem vierten Verfahrensunterschritt des automatisierten Anbringens führt der bewegliche Roboterarm die aufgenommenen Tapeelemente mit dem an der Tapeunterseite angebrachten geschmolzenen heißschmelzenden Klebstoff zu der Dämpfungsschicht und bringt die Tapeunterseite der Tapeelemente mit dem jeweiligen Bereich der Oberseite der Dämpfungsschicht in Kontakt, um ein Verkleben der Tapeelemente mit der Oberseite der Dämpfungsschicht zu ermöglichen. Der Roboterarm verklebt insbesondere die Tapeelemente passgenau mit der Oberseite der Dämpfungsschicht.

Die für die Fahrradsattel gemäß dem ersten Aspekt genannten Ausführungsformen sind ebenso Ausführungsformen für das Verfahren zum Herstellen des Fahrradsattels gemäß dem zweiten Aspekt.

Gemäß einem dritten Aspekt der vorliegenden Erfindung wird die vorliegende Aufgabe durch eine Verwendung von Tapeelementen zur ergonomischen Anpassung eines Fahrradsattels an eine Anatomie eines Fahrradfahrers und zum Schutz eines elastischen Materials einer Dämpfungsschicht des Fahrradsattels gelöst, wobei der Fahrradsattel eine Fahrradsattelschale und eine Dämpfungsschicht aufweist, welche an der Fahrradsattelschale befestigt ist, wobei die Dämpfungsschicht ein elastisches Material umfasst, welches ausgebildet ist, auf den Fahrradsattel wirkende Kräfte durch eine Verformung des elastischen Materials aufzunehmen, und wobei die Mehrzahl von Tapeelementen abschnittsweise an der Dämpfungsschicht durch eine stoffschlüssige Verbindung befestigt sind.

Dadurch wird der technische Vorteil erreicht, dass die Tapeelemente eine vorteilhafte Optimierung der Oberseite der Dämpfungsschicht in Bezug auf ein ergonomisches Sitzverhalten des Fahrradfahrers auf der Oberseite der Dämpfungsschicht und in Bezug auf einen wirksamen Materialschutz des elastischen Materials der Dämpfungsschicht sicherstellen.

Insbesondere umfassen die Tapeelemente, strukturelle definierte Tapebereiche, welche insbesondere einzeln ausgeschnitten, an der Dämpfungsschicht des Fahrradsattels stoffschlüssig befestigt sind. Alternativ können die Tapeelemente jedoch auch klassische Tapebänder umfassen, welche insbesondere nebeneinander und/oder übereinander auf der Dämpfungsschicht aufgebracht sind.

Insbesondere werden die Tapeelemente derart an der Oberseite der Dämpfungsschicht befestigt, dass ein Spalt an der Oberseite der Dämpfungsschicht bereitgestellt wird, welcher sich hinter den auf dem Fahrradsattel aufliegenden Sitzknochen des Gesäßes des Fahrradfahrers ausbildet.

Insbesondere werden die Tapeelemente derart an der Oberseite der Dämpfungsschicht befestigt, dass ein Tapeelement oder mehrere Tapeelemente in Richtung der Sattelnase des Fahrradsattels über das darüber angeordnete Tapeelement hinausragen, so dass sich die Dämpfungsschicht nicht in Richtung der Sattelnase, sondern nach hinten hin absenkt, so dass ein stabiler Sitz der Sitzknochen des Gesäßes auf dem Fahrradsattel sichergestellt wird.

Die für die Fahrradsattel gemäß dem ersten Aspekt und für das Verfahren zum Herstellen des Fahrradsattels gemäß dem zweiten Aspekt genannten Ausführungsformen sind ebenso Ausführungsformen für die Verwendung gemäß dem dritten Aspekt.

### Kurze Beschreibung der Figuren

Die Erfindung wird nun unter Bezugnahme auf die beigefügten Figuren erläutert, die exemplarische und nicht beschränkende Ausführungsformen der Erfindung zeigen, wobei
- Figur 1: einen Fahrradsattel eines Fahrrads gemäß einer Ausführungsform in einer ersten Ansicht,
- Figur 2: einen Fahrradsattel eines Fahrrads gemäß der in Figur 1 gezeigten Ausführungsform in einer zweiten Ansicht,
- Figur 3: einen Fahrradsattel eines Fahrrads gemäß der in Figur 1 und 2 gezeigten Ausführungsform in einer dritten Ansicht, und
- Figur 4: eine schematische Darstellung eines Verfahrens zum Herstellen eines Fahrradsattels gemäß einer Ausführungsform zeigt.

### Detaillierte Beschreibung der Figuren

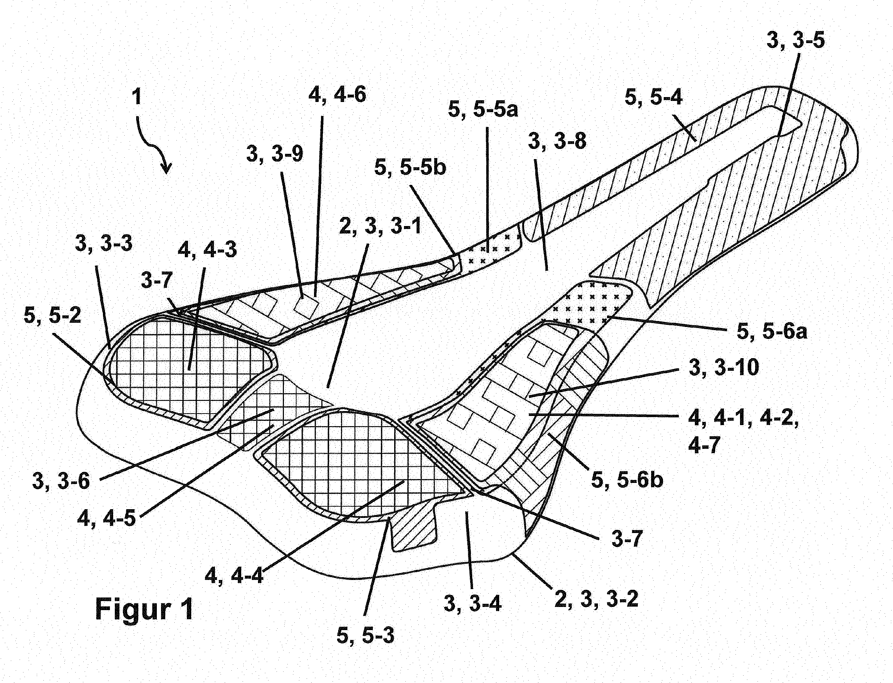

Figur 1 zeigt einen Fahrradsattel eines Fahrrads gemäß einer Ausführungsform in einer ersten Ansicht.

Der in der Figur 1 dargestellte Fahrradsattel 1 ist an einem in Figur 1 nicht dargestellten Fahrradrahmen eines Fahrrads befestigbar. In der Figur 1 ist der Fahrradsattel 1 in einer seitlichen Hinteransicht dargestellt.

Der Fahrradsattel 1 ist üblicherweise mit einer in Figur 1 nicht dargestellten Sattelstange verbunden, welche eine physische Verbindung zwischen dem Fahrradsattel 1 und dem Fahrrad, insbesondere dem Fahrradrahmen, sicherstellt.

Der Fahrradsattel 1 weist eine Fahrradsattelschale 2 und eine Dämpfungsschicht 3, welche an der Fahrradsattelschale 2 befestigt ist, auf. Die Dämpfungsschicht 3 umfasst ein elastisches Material, welches ausgebildet ist, auf den Fahrradsattel 1 wirkende Kräfte durch eine Verformung des elastischen Materials aufzunehmen.

Die Fahrradsattelschale 2 besteht üblicherweise aus einem widerstandsfähigen und harten Kunststoffmaterial, wie z.B. einem Thermoplast-Kunststoff oder einem Carbon-Thermoplast-Verbundstoff, und stellt die strukturelle Stabilität des Fahrradsattels 1 sicher, wodurch eine wirksame Aufnahme des Gewichts des Fahrradfahrers sichergestellt wird.

Aus ergonomischen Gründen kann der Fahrradfahrer jedoch nicht direkt auf der harten Fahrradsattelschale 2 sitzen, so dass ein Fahrradsattel 1 üblicherweise, zumindest im Bereich der Hauptsitzfläche, eine Dämpfungsschicht 3 aufweist, welche ein für den Fahrradfahrer angenehmes Sitzen auf dem Fahrradsattel 1 ermöglicht. Insbesondere ist die Fahrradsattelschale 2 und die Dämpfungsschicht 3 stoffschlüssig, insbesondere durch eine Klebeverbindung, miteinander verbunden.

Das elastische Material der Dämpfungsschicht 3 umfasst insbesondere ein thermoplastisches Polyurethan (TPU), insbesondere ein expandiertes thermoplastisches Polyurethan (E-TPU), ein thermoplastisches Elastomer (TPE), insbesondere ein Polyether-Block-Polyamid, ein thermoplastisches Elastomer-Vulkanisat (TPE-V), Polyurethan (PU), Ethylen-Vinylacetat-Copolymer (EVA), ein thermoplastisches Styrol-Blockcopolymer (TPS), insbesondere ein expandiertes thermoplastisches Styrol-Blockcopolymer (E-TPS) und/oder Polystyrol (PS), insbesondere expandiertes Polystyrol (EPS).

In der Figur 1 sind die Fahrradsattelschale 2 und die an der Fahrradsattelschale 2 angeordnete Dämpfungsschicht 3 als ein Bauteil dargestellt.

Der Fahrradsattel 1 gemäß der in Figur 1 dargestellten Ausführungsform weist ferner eine Mehrzahl von Tapeelementen 4 auf, welche zumindest abschnittsweise an der Dämpfungsschicht 3 durch eine stoffschlüssige Verbindung befestigt sind, um zum einen eine ergonomische Anpassung des Fahrradsattels 1 an eine Anatomie eines auf dem Fahrradsattel 1 sitzenden Fahrradfahrers sicherzustellen, und zum anderen einen Schutz des elastischen Materials der Dämpfungsschicht 3 sicherzustellen sowie außerdem die Unebenheiten in der Oberfläche der Dämpfungsschicht 3, insbesondere wenn diese aus E-TPU besteht, auszugleichen und zu kaschieren.

Aufgrund der Form des Gesäßes des auf dem Fahrradsattel 1 sitzenden Fahrradfahrers, bzw. aufgrund der Sitzposition des auf dem Fahrradsattel 1 sitzenden Fahrradfahrers, wirken auf bestimmte Bereiche des Fahrradsattels 1, die in einem direkten Kontakt mit dem Gesäß des Fahrradfahrers stehen, eine größere Kraft, als auf andere Bereiche, an denen beispielsweise das Gesäß des Fahrradfahrers nicht anliegt.

Somit besteht in den bestimmten Bereiche des Fahrradsattels 1, die in einem direkten Kontakt mit dem Gesäß des Fahrradfahrers stehen, ein größerer Bedarf an einer Dämpfung, als an den anderen Bereichen des Fahrradsattels 1, an denen das Gesäß des Fahrradfahrers nicht anliegt.

Da die Mehrzahl der Figur 1 dargestellten Tapeelemente 4 an den bestimmten Bereichen des Fahrradsattels 1, die in einem direkten Kontakt mit dem Gesäß des Fahrradfahrers stehen, angeordnet sind, kann in diesen bestimmten Bereichen eine besonders wirksame Dämpfung zwischen dem Fahrradsattel 1 und dem Gesäß des Fahrradfahrers ermöglicht werden, so dass eine vorteilhafte Anpassung der Sitzergonomie an eine Anatomie des Fahrradfahrers, insbesondere an eine Anatomie des Gesäßes des Fahrradfahrers sichergestellt wird.

Ein weiterer Vorteil der Mehrzahl der Tapeelemente 4 ist, dass die bestimmten Bereiche des Fahrradsattels 1, die in einem direkten Kontakt mit dem Gesäß des Fahrradfahrers stehen, vor einer Beschädigung geschützt werden können. Insbesondere kann verhindert werden, dass aufgrund der andauernden Beanspruchung ein Loch und/oder Abrieb in der Dämpfungsschicht 3 entsteht, wodurch das elastische Material der Dämpfungsschicht 3 unter Umständen beschädigt werden könnte.

Wie in der Figur 1 dargestellt ist, sind die Tapeelemente 4 als strukturelle definierte Tapebereiche 4-1 geformt, welche insbesondere einzeln ausgeschnitten, an der Dämpfungsschicht 3 des Fahrradsattels 1 stoffschlüssig befestigt sind. Alternativ können jedoch auch klassische Tapebänder, welche insbesondere nebeneinander und/oder übereinander auf die Dämpfungsschicht 3 aufgetragen werden, verwendet werden.

Die Tapeelemente 4, insbesondere Tapebereiche 4-1, weisen eine in Figur 1 nicht dargestellte Tapeunterseite, insbesondere eine klebende Tapeunterseite, auf, welche stoffschlüssig zumindest abschnittsweise an der Dämpfungsschicht 3 befestigt ist.

Die Tapeelemente 4, insbesondere Tapebereiche 4-1, weisen eine in Figur 1 dargestellte Tapeoberseite 4-2 auf, an welcher das Gesäß des Fahrradfahrers anlegbar ist, bzw. welche der Dämpfungsschicht 3 abgewandt ist. Insbesondere weist die Tapeoberseite 4-2 eine zumindest abschnittsweise aufgeraute Oberflächenstruktur auf, um ein Abrutschen des Gesäßes des Fahrradfahrers von der Tapeoberseite 4-2 zu erschweren.

Die Tapeelemente 4, insbesondere Tapebereiche 4-1, umfassend insbesondere zumindest eines der folgenden Materialien, herkömmliche bei Fahrradsätteln üblicherweise verwendete Materialien, wie echtes Leder, insbesondere jedoch Kunstleder, Mikrofasermaterial, und andere. Insbesondere umfasst das Material der Tapeelemente Polyurethan (PU). Polyurethan (PU) stellt insbesondere an der höchsten Stelle der Oberfläche des Fahrradsattels einen vorteilhaft Halt für das Gesäß bereit, so dass ein Abrutschen des Gesäßes nach hinten verhindert wird. Polyurethan (PU) stellt ferner, insbesondere in mehreren Lagen übereinander, im Bereich der anliegenden Sitzknochen des Gesäßes des Fahrradfahrers einen vorteilhaften Sitz sicher.

Insbesondere umfassen die Tapeelemente 4 ein strukturiertes Gewebe, insbesondere mit einer aufgerauten Oberfläche, wodurch ein Abrutschen des Gesäßes nach vorne sichergestellt wird, und gleichzeitig, wenn es seitlich der Sattelnase angebracht ist, insbesondere versetzt, insbesondere um 90° zur Geweberichtung versetzt, an den Sitzknochen anliegt, und damit insbesondere richtungsselektiv rutschhemmend wirkt. Das Material der Tapeelemente 4 umfasst hierbei insbesondere ein Interlock-Material.

Die Tapeelemente 4 insbesondere Tapebereiche 4-1, können insbesondere ein Gewebe aufweisen, um die Stabilität der Tapeelemente 4 zu erhöhen, bzw. als ein klassisches Gewebeband oder Isolierband ausgebildet sein.

Insbesondere können zumindest einige der Tapeelemente 4 übereinander oder zumindest abschnittsweise überlappend an der Dämpfungsschicht 3 angeordnet sein.

Wie aus der Figur 1 ferner ersichtlich ist, weist die Dämpfungsschicht 3 eine Oberseite 3-1 auf, welche einem Gesäß eines auf dem Fahrradsattel 1 sitzenden Fahrers zugewandt ist, wobei die Dämpfungsschicht 3 einen die Oberseite 3-1 begrenzenden Schichtrand 3-2 aufweist, wobei die Tapeelemente 4 an der Oberseite 3-1 angeordnet sind und sich insbesondere zumindest abschnittsweise über den Schichtrand 3-2 erstrecken.

Wie aus der Figur 1 hervorgeht, ist die Oberseite 3-1 der Dämpfungsschicht 3 als eine gekrümmte Oberseite 3-1 ausgebildet ist, wobei die Tapeelemente 4 an der gekrümmten Oberseite 3-1 befestigt sind.

Insbesondere sind die Tapeelemente 4 mit der Dämpfungsschicht 3, insbesondere Oberseite 3-1 und/oder Schichtrand 3-2, verklebt, insbesondere durch einen heißschmelzenden Klebstoff. Die bevorzugte Anwendung eines heißschmelzenden Klebstoffs ermöglicht ein vorteilhaft automatisiertes Anbringen der Tapeelemente 4 an der Dämpfungsschicht 3.

Im Folgenden wird nun die Anordnung der einzelnen Tapeelemente 4 im Detail beschrieben.

Die Dämpfungsschicht 3 umfasst einen ersten Dämpfungsunterbereich 3-3, insbesondere einen ersten hinteren Dämpfungsunterbereich 3-3, und einen zweiten Dämpfungsunterbereich 3-4, insbesondere zweiten hinteren Dämpfungsunterbereich 3-4 auf.

Die Tapeelemente 4 sind hierbei an dem ersten und zweiten Dämpfungsunterbereich 3-3, 3-4 befestigt. Insbesondere ist ein erstes Tapeelement 4-3 der Mehrzahl von Tapeelementen 4 an dem ersten Dämpfungsunterbereich 3-3 befestigt, und ist ein zweites Tapeelement 4-4 der Mehrzahl von Tapeelementen 4 an dem zweiten Dämpfungsunterbereich 3-4 befestigt. Das erste und zweite Tapeelement 4-3 und 4-4 sind hintere Tapeelemente.

Wie nachfolgend detaillierter ausgeführt ist, ist zwischen dem ersten Tapeelement 4-3 und dem ersten Dämpfungsunterbereich 3-3 eine erste Zwischenschichtfläche 5-2 einer Zwischenschicht 5 angeordnet. Wie nachfolgend detaillierter ausgeführt ist, ist zwischen dem zweiten Tapeelement 4-4 und dem zweiten Dämpfungsunterbereich 3-4 eine zweite Zwischenschichtfläche 5-3 einer Zwischenschicht 5 angeordnet. Wie aus der Fig. 1 nicht im Detail hervorgeht, umfasst die erste und zweite Zwischenschichtfläche 5-2, 5-3 insbesondere jeweils zwei übereinander angeordnete Zwischenschichtlagen.

Die an dem ersten und zweiten Dämpfungsunterbereich 3-3, 3-4 befestigten Tapeelemente 4 bzw. die Zwischenschichtflächen 5-2, 5-3 stellen einen besonders vorteilhaften ergonomischen Kontakt zwischen dem Gesäß des Fahrradfahrers und der Dämpfungsschicht 3 sicher.

Die Dämpfungsschicht 3 umfasst einen dritten Dämpfungsunterbereich 3-5, insbesondere ein Sattelnasenauflageelement, welcher insbesondere von dem ersten und/oder zweiten Dämpfungsunterbereich 3-3, 3-4 beabstandet ist, wobei die Tapeelemente 4 insbesondere nicht an dem dritten Dämpfungsunterbereich 3-5, insbesondere Sattelnasenauflageelement, befestigt sind.

Wie nachfolgend detaillierter ausgeführt ist, ist an dem dritten Dämpfungsunterbereich 3-5, insbesondere dem Sattelnasenauflageelement, eine dritte Zwischenschichtfläche 5-4 einer Zwischenschicht 5 angeordnet. Wie aus der Fig. 1 nicht im Detail hervorgeht, umfasst die dritte Zwischenschichtfläche 5-4 insbesondere eine einzige Zwischenschichtlage.

Die Dämpfungsschicht 3 umfasst einen vierten Dämpfungsunterbereich 3-6, insbesondere Steißbeindämpfungsbereich, welcher sich zwischen dem ersten und zweiten Dämpfungsunterbereich 3-3, 3-4 erstreckt, und wobei die Tapeelemente 4 an dem vierten Dämpfungsunterbereich 3-6 befestigt sind. Insbesondere ist ein drittes Tapeelement 4-5 der Mehrzahl von Tapeelementen 4 an dem vierten Dämpfungsunterbereich 3-6 befestigt.

Wie aus der Fig. 1 hervorgeht, ist insbesondere das dritte Tapeelement 4-5 direkt auf den vierten Dämpfungsunterbereich 3-6 der Dämpfungsschicht 3 aufgebracht, ohne dass dazwischen eine Zwischenschicht 5 vorhanden ist.

Die Dämpfungsschicht 3 umfasst einen fünften Dämpfungsunterbereich 3-9, insbesondere einen fünften mittleren Dämpfungsunterbereich 3-9, und einen sechsten Dämpfungsunterbereich 3-10, insbesondere einen sechsten mittleren Dämpfungsunterbereich 3-10, wobei sich der fünfte Dämpfungsunterbereich 3-9 insbesondere von dem ersten Dämpfungsunterbereich 3-3, insbesondere ersten hinteren Dämpfungsunterbereich 3-3 zu dem dritten Dämpfungsunterbereich 3-5, insbesondere Sattelnasenauflageelement, erstreckt, und wobei sich der sechste Dämpfungsunterbereich 3-10 insbesondere von dem zweiten Dämpfungsunterbereich 3-4, insbesondere zweiten hinteren Dämpfungsunterbereich 3-4 zu dem dritten Dämpfungsunterbereich 3-5, insbesondere Sattelnasenauflageelement, erstreckt.

Die Tapeelemente 4 sind an dem fünften und sechsten Dämpfungsunterbereich 3-9 und 3-10 befestigt. Insbesondere ist ein viertes Tapeelement 4-6 der Mehrzahl von Tapeelementen 4 an dem fünften Dämpfungsunterbereich 3-9 befestigt. Insbesondere ist ein fünftes Tapeelement 4-7 der Mehrzahl von Tapeelementen 4 an dem sechsten Dämpfungsunterbereich 3-10 befestigt. Das vierte und fünfte Tapeelement 4-6 und 4-7 umfasst insbesondere ein viertes mittleres Tapeelement 4-6 und ein fünftes mittleres Tapeelement 4-7.

Wie in der Fig. 1 lediglich schematisch angedeutet ist, sind der fünfte mittlere Dämpfungsunterbereich 3-9 und der sechste mittlere Dämpfungsunterbereich 3-10 von dem ersten hinteren Dämpfungsunterbereich 3-3 und dem zweiten hinteren Dämpfungsunterbereich 3-4 jeweils durch einen Spalt 3-7 voneinander getrennt. Ein entsprechend jeweils insbesondere vorhandener Spalt kennzeichnet einen Doppelstufensattel, welcher einen besonders ergonomischen Sitz der Gesäßknochen des Gesäßes des Fahrradfahrers auf dem fünften mittleren Dämpfungsunterbereich 3-9 und dem sechsten mittleren Dämpfungsunterbereich 3-10 gewährleistet, und wobei gleichzeitig ein Abrutschen der Gesäßknochen nach vorne und auch nach hinten verhindert wird. Ein Einsinken der fünften und sechsten Dämpfungsunterbereiche 3-9 und 3-10, insbesondere im hinteren Bereich in Richtung des ersten und zweiten Dämpfungsunterbereichs 3-3, 3-4, verhindert, dass die Gesäßknochen nach vorne in Richtung Sattelnase rutschen.

Wie nachfolgend detaillierter ausgeführt ist, ist zwischen dem vierten Tapeelement 4-6 und dem fünften Dämpfungsunterbereich 3-9 eine vierte Zwischenschichtfläche 5-5a und/oder 5-5b einer Zwischenschicht 5 angeordnet. Wie nachfolgend detaillierter ausgeführt ist, ist zwischen dem fünften Tapeelement 4-7 und dem sechsten Dämpfungsunterbereich 3-10 eine fünfte Zwischenschichtfläche 5-6a und/oder 5-6b einer Zwischenschicht 5 angeordnet. Wie in der Fig. 1 nur schematisch angedeutet ist, umfasst die vierte und fünfte Zwischenschichtfläche 5-5a und 5-5b, 5-6a und 5-6b insbesondere jeweils zwei zumindest abschnittsweise übereinander angeordnete Zwischenschichtlagen.

Wie aus der Fig. 1 hervorgeht erstreckt sich jeweils die obere der beiden Zwischenschichtlagen der vierten und fünften Zwischenschichtfläche 5-5a, 5-5b, 5-6a und 5-6b jeweils über den Schichtrand 3-2 der Dämpfungsschicht 3.

Die Ausnehmung 3-8 der Dämpfungsschicht 3 ist insbesondere eine Schambeinausnehmung bzw. Dammbereichsausnehmung, welche insbesondere zwischen dem ersten, zweiten, dritten, vierten, fünften und/oder sechsten Dämpfungsunterbereich 3-3, 3-4, 3-5, 3-6, 3-9 und 3-10 angeordnet ist, wobei die Tapeelemente 4 und die Zwischenschicht 5 insbesondere, nicht in der Ausnehmung 3-8, insbesondere Schambeinausnehmung bzw. Dammbereichsausnehmung, befestigt sind.

Der Figur 1 dargestellte Zwischenschicht 5 ist zumindest abschnittsweise zwischen der Dämpfungsschicht 3 und den Tapeelementen 4 angeordnet, wobei die Zwischenschicht 5 insbesondere mit der Dämpfungsschicht 3 stoffschlüssig verbunden ist, und wobei die Tapeelemente 4 insbesondere mit der Zwischenschicht 5 stoffschlüssig verbunden, insbesondere verklebt sind, sind.

Die Zwischenschicht 5 ist insbesondere aus demselben Material wie die Tapeelemente 4 gefertigt.

Wie aus der Figur 1 entnommen werden kann, ist die Zwischenschicht 5 an dem ersten, zweiten, dritten, fünften und/oder sechsten Dämpfungsunterbereich 3-3, 3-4, 3-5, 3-6, 3-9 und 3-10 befestigt ist, wobei die Zwischenschicht 5 insbesondere nicht an der Ausnehmung 3-8 und/oder nicht an dem vierten Dämpfungsunterbereich 3-6 befestigt ist.

Wie aus der Figur 1 entnommen werden kann, weist die Zwischenschicht 5 mehrere voneinander getrennte Zwischenschichtflächen 5-1 aufweist, wobei die voneinander getrennten Zwischenschichtflächen 5-1, insbesondere eine erste Zwischenschichtfläche 5-2 umfasst, welche an dem ersten Dämpfungsunterbereich 3-3 befestigt ist, und insbesondere eine zweite Zwischenschichtfläche 5-3 umfasst, welche an dem zweiten Dämpfungsunterbereich 3-4 befestigt ist, und insbesondere eine dritte Zwischenschichtfläche 5-4 umfasst, welche an dem dritten Dämpfungsunterbereich 3-5 befestigt ist, und insbesondere eine vierte Zwischenschichtfläche 5-5a und 5-5b umfasst welche an dem fünften Dämpfungsunterbereich 3-9 befestigt ist, und insbesondere eine fünfte Zwischenschichtfläche 5-6a und 5-6b umfasst welche an dem sechsten Dämpfungsunterbereich 3-10 befestigt ist.

Die dritte, vierte und fünfte Zwischenschichtfläche 5-4, 5-5a, 5-5b, 5-6a und 5-6b greift insbesondere über einen eine Oberseite 3-1 der Dämpfungsschicht 3 begrenzenden Schichtrand 3-2 über.

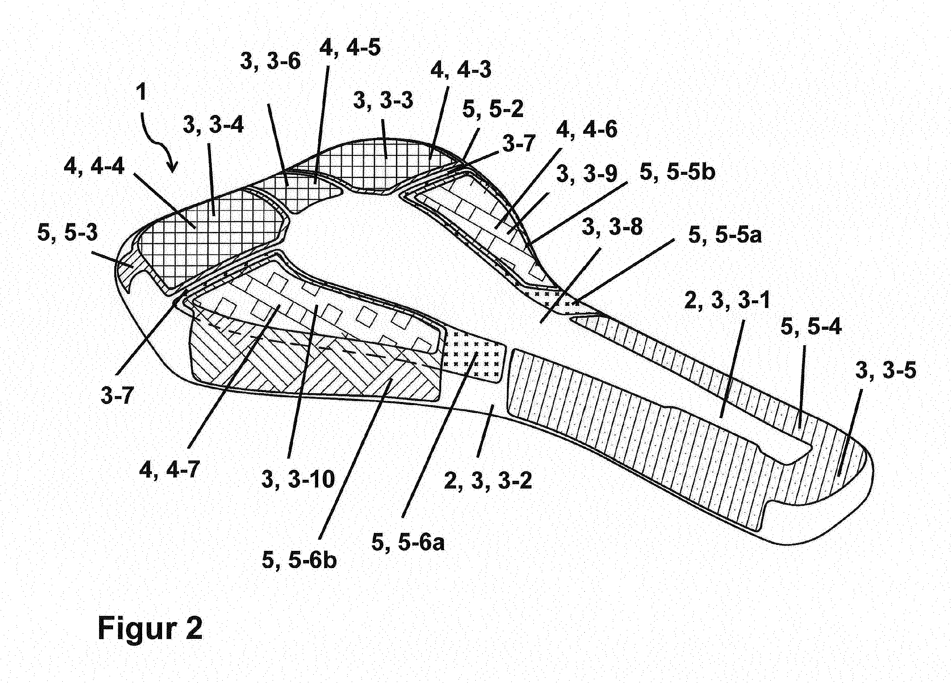

Figur 2 zeigt einen Fahrradsattel eines Fahrrads gemäß der in Figur 1 gezeigten Ausführungsform in einer zweiten Ansicht, insbesondere in einer Vorderansicht.

Für weitere Details wird auf die detaillierten Ausführungen zur Figur 1 verwiesen.

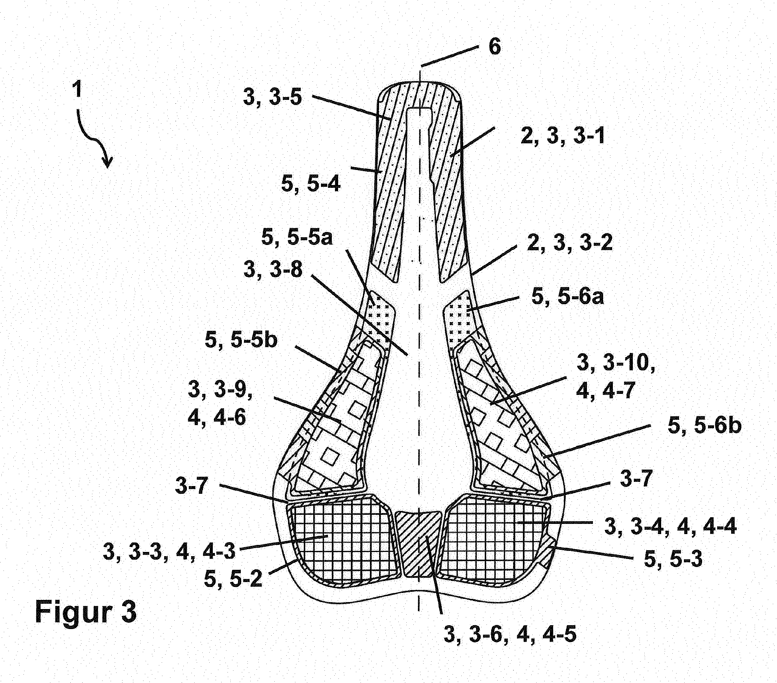

Figur 3 zeigt einen Fahrradsattel eines Fahrrads gemäß der in Figur 1 und 2 gezeigten Ausführungsform in einer dritten Ansicht, insbesondere in einer Draufsicht.

Eine Längsachse des Fahrradsattels 1 ist durch das Bezugszeichen 6 gekennzeichnet. Für weitere Details wird auf die detaillierten Ausführungen zur Figur 1 verwiesen.

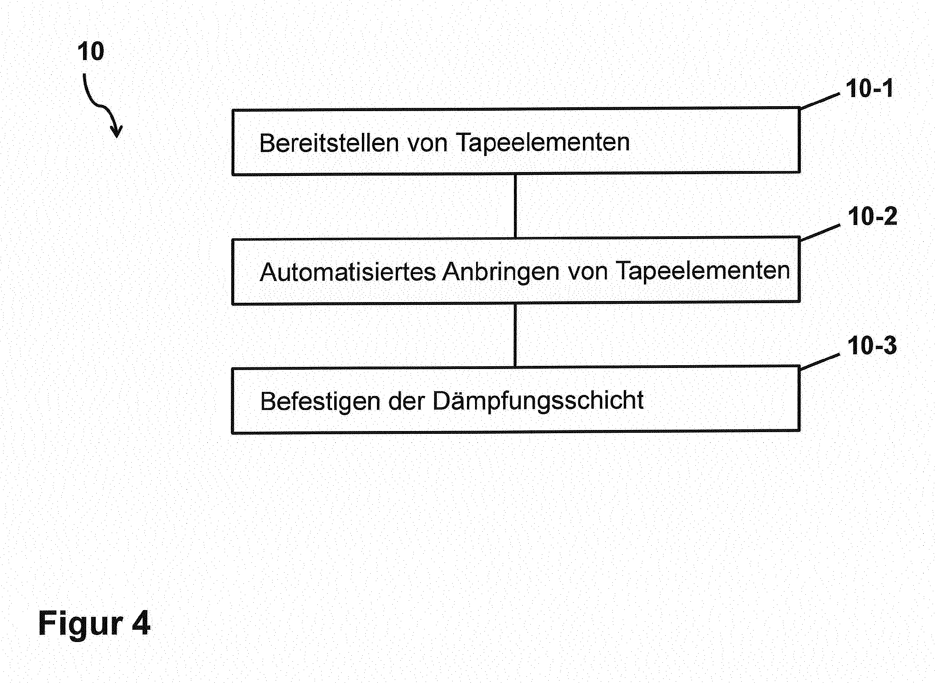

Figur 4 zeigt eine schematische Darstellung eines Verfahrens zum Herstellen eines Fahrradsattels gemäß einer Ausführungsform.

Das Verfahren 10 umfasst als ersten Verfahrensschritt das Bereitstellen 10-1 einer Mehrzahl von Tapeelementen 4.

Das Verfahren 10 umfasst als zweiten Verfahrensschritt das automatisierte Anbringen 10-2, insbesondere durch einen Roboter, der Mehrzahl von Tapeelementen 4 auf einer Dämpfungsschicht 3 eines Fahrradsattels 1, wobei die Dämpfungsschicht 3 ein elastisches Material umfasst, welches ausgebildet ist, auf den Fahrradsattel 1 wirkende Kräfte durch eine Verformung des elastischen Materials aufzunehmen.

Das Verfahren 10 umfasst als dritten Verfahrensschritt das Befestigen 10-3 der Dämpfungsschicht 3 auf einer Fahrradsattelschale 2 des Fahrradsattels 1, um den Fahrradsattel 1 herzustellen.

### Bezugszeichen

- 1: Fahrradsattel
- 2: Fahrradsattelschale
- 3: Dämpfungsschicht
- 3-1: Oberseite
- 3-2: Schichtrand
- 3-3: Erster Dämpfungsunterbereich
- 3-4: Zweiter Dämpfungsunterbereich
- 3-5: Dritter Dämpfungsunterbereich
- 3-6: Vierter Dämpfungsunterbereich
- 3-7: Spalt
- 3-8: Ausnehmung
- 3-9: Fünfter Dämpfungsunterbereich
- 3-10: Sechster Dämpfungsunterbereich
- 4: Tapeelement
- 4-1: Tapebereich
- 4-2: Tapeoberseite
- 4-3: Erstes Tapeelement
- 4-4: Zweites Tapeelement
- 4-5: Drittes Tapeelement
- 4-6: Viertes Tapeelement
- 4-7: Fünftes Tapeelement
- 5: Zwischenschicht
- 5-1: Zwischenschichtfläche
- 5-2: Erste Zwischenschichtfläche
- 5-3: Zweite Zwischenschichtfläche
- 5-4: Dritte Zwischenschichtfläche
- 5-5a: Vierte Zwischenschichtfläche mit Tapeformvariante 1
- 5-5b: Vierte Zwischenschichtfläche mit Tapeformvariante 2
- 5-6a: Fünfte Zwischenschichtfläche mit Tapeformvariante 1
- 5-6b: Fünfte Zwischenschichtfläche mit Tapeformvariante 2
- 6: Längsachse des Fahrradsattels
- 10: Verfahren zum Herstellen eines Fahrradsattels
- 10-1: Erster Verfahrensschritt: Bereitstellen einer Mehrzahl von Tapeelementen
- 10-2: Zweiter Verfahrensschritt: Automatisiertes Anbringen der Mehrzahl von Tapeelementen auf einer Dämpfungsschicht eines Fahrradsattels
- 10-3: Dritter Verfahrensschritt: Befestigen der Dämpfungsschicht auf einer Fahrradsattelschale des Fahrradsattels

## Patentansprüche

1. Fahrradsattel (1), welcher an einem Fahrrad befestigbar ist, umfassend:
eine Fahrradsattelschale (2), und
eine Dämpfungsschicht (3), welche an der Fahrradsattelschale (2) befestigt ist, wobei die Dämpfungsschicht (3) ein elastisches Material umfasst, welches ausgebildet ist, auf den Fahrradsattel (1) wirkende Kräfte durch eine Verformung des elastischen Materials aufzunehmen,
wobei der Fahrradsattel (1) eine Mehrzahl von Tapeelementen (4, 4-3, 4-4, 4-5, 4-6, 4-7) aufweist, welche abschnittsweise an der Dämpfungsschicht (3) durch eine stoffschlüssige Verbindung befestigt sind, um eine ergonomische Anpassung des Fahrradsattels (1) an eine Anatomie eines Fahrradfahrers und einen Schutz des elastischen Materials der Dämpfungsschicht (3) sicherzustellen sowie dessen Unebenheiten auszugleichen oder zu kaschieren,
**dadurch gekennzeichnet, dass** die Tapeelemente (4, 4-3, 4-4, 4-5, 4-6, 4-7) eine erste Gruppe von Tapeelementen (4, 4-3, 4-4, 4-5, 4-6, 4-7) mit einer ersten Steifigkeit umfassen, und dass die Tapeelemente (4, 4-3, 4-4, 4-5, 4-6, 4-7) eine zweite Gruppe von Tapeelementen (4, 4-3, 4-4, 4-5, 4-6, 4-7) mit einer zweiten Steifigkeit umfassen, wobei die erste Steifigkeit größer als die zweite Steifigkeit ist.

2. Fahrradsattel (1) nach Anspruch 1, wobei die Tapeelemente (4, 4-3, 4-4, 4-5, 4-6, 4-7) mit der Dämpfungsschicht (3), insbesondere mit einer Oberseite (3-1) und/oder einem Schichtrand (3-2) der Dämpfungsschicht (3), verklebt sind, insbesondere durch einen heißschmelzenden Klebstoff.

3. Fahrradsattel (1) nach einem der vorangehenden Ansprüche, wobei die Tapeelemente (4, 4-3, 4-4, 4-5, 4-6, 4-7) jeweils eine der Dämpfungsschicht (3) zugewandte Tapeunterseite aufweisen, welche mit der Dämpfungsschicht (3) stoffschlüssig verbunden, insbesondere verklebt, ist, und wobei die Tapeelemente (4, 4-3, 4-4, 4-5, 4-6, 4-7) jeweils eine Tapeoberseite (4-2) aufweisen, welche der Dämpfungsschicht (3) abgewandt ist.

4. Fahrradsattel (1) nach einem der vorangehenden Ansprüche, wobei eine der Dämpfungsschicht (3) abgewandte Tapeoberseite (4-2) der Tapeelemente (4, 4-3, 4-4, 4-5, 4-6, 4-7) eine zumindest abschnittsweise aufgeraute Oberflächenstruktur aufweist, um ein Abrutschen des Gesäßes des Fahrradfahrers von der Tapeoberseite (4-2) zu erschweren.

5. Fahrradsattel (1) nach einem der vorangehenden Ansprüche, wobei die Dämpfungsschicht (3) einen ersten Dämpfungsunterbereich (3-3), insbesondere einen ersten hinteren Dämpfungsunterbereich, und einen zweiten Dämpfungsunterbereich (3-4), insbesondere einen zweiten hinteren Dämpfungsunterbereich, umfasst, und wobei die Tapeelemente (4, 4-3, 4-4), an dem ersten und/oder zweiten Dämpfungsunterbereich (3-3, 3-4) befestigt sind.

6. Fahrradsattel (1) nach einem der vorangehenden Ansprüche, wobei die Dämpfungsschicht (3) einen dritten Dämpfungsunterbereich (3-5), insbesondere ein Sattelnasenauflageelement, umfasst, welcher insbesondere von dem ersten und/oder zweiten Dämpfungsunterbereich (3-3, 3-4), insbesondere ersten und/oder zweiten hinteren Dämpfungsunterbereich (3-3, 3-4) beabstandet ist, wobei die Tapeelemente (4, 4-3, 4-4, 4-5, 4-6, 4-7) insbesondere nicht an dem dritten Dämpfungsunterbereich (3-5), insbesondere Sattelnasenauflageelement, befestigt sind.

7. Fahrradsattel (1) nach Anspruch 5 oder 6, wobei die Dämpfungsschicht (3) einen vierten Dämpfungsunterbereich (3-6), insbesondere Steißbeindämpfungsbereich, umfasst, welcher sich zwischen dem ersten und zweiten Dämpfungsunterbereich (3-3, 3-4) erstreckt, und wobei die Tapeelemente (4, 4-5), an dem vierten Dämpfungsunterbereich (3-6) befestigt sind.

8. Fahrradsattel (1) nach einem der vorangehenden Ansprüche, wobei die Dämpfungsschicht (3) einen fünften Dämpfungsunterbereich (3-9), insbesondere einen fünften mittleren Dämpfungsunterbereich (3-9), und einen sechsten Dämpfungsunterbereich (3-10), insbesondere einen sechsten mittleren Dämpfungsunterbereich (3-10), umfasst, wobei sich der fünfte Dämpfungsunterbereich (3-9) insbesondere von dem ersten Dämpfungsunterbereich (3-3), insbesondere ersten hinteren Dämpfungsunterbereich (3-1), zu dem dritten Dämpfungsunterbereich (3-5), insbesondere Sattelnasenauflageelement, erstreckt, und wobei sich der sechste Dämpfungsunterbereich (3-10) insbesondere von dem zweiten Dämpfungsunterbereich (3-4), insbesondere zweiten hinteren Dämpfungsunterbereich (3-2), zu dem dritten Dämpfungsunterbereich (3-5), insbesondere Sattelnasenauflageelement, erstreckt, und wobei die Tapeelemente (4, 4-6, 4-7), an dem fünften und/oder sechsten Dämpfungsunterbereich (3-9, 3-10) befestigt sind.

9. Fahrradsattel (1) nach einem der vorangehenden Ansprüche, wobei die Dämpfungsschicht (3) eine Ausnehmung (3-8), insbesondere eine Schambeinausnehmung bzw. Dammausnehmung umfasst, welche insbesondere zwischen dem ersten, zweiten, dritten, vierten, fünften und/oder sechsten Dämpfungsunterbereich (3-3, 3-4, 3-5, 3-6, 3-9, 3-10) angeordnet ist, wobei die Tapeelemente (4, 4-3, 4-4, 4-5, 4-6, 4-7) insbesondere, nicht in der Ausnehmung (3-8), insbesondere Schambeinausnehmung bzw. Dammausnehmung, befestigt sind.

10. Fahrradsattel (1) nach einem der vorangehenden Ansprüche, ferner umfassend zumindest eine Zwischenschicht (5), welche zumindest abschnittsweise zwischen der Dämpfungsschicht (3) und den Tapeelementen (4, 4-3, 4-4, 4-5, 4-6, 4-7) angeordnet ist, wobei die Zwischenschicht (5) insbesondere mit der Dämpfungsschicht (3) stoffschlüssig verbunden ist, und wobei die Tapeelemente (4, 4-3, 4-4, 4-5, 4-6, 4-7) insbesondere mit der Zwischenschicht (5) stoffschlüssig verbunden sind.

11. Fahrradsattel (1) nach Anspruch 10, wobei die Zwischenschicht (5) an dem ersten, zweiten, dritten, vierten, fünften und/oder sechsten Dämpfungsunterbereich (3-3, 3-4, 3-5, 3-6, 3-9, 3-10) befestigt ist, wobei die Zwischenschicht (5) insbesondere nicht an der Ausnehmung (3-8) befestigt ist.

12. Fahrradsattel (1) nach Anspruch 10 oder 11, wobei die Zwischenschicht (5) als eine durchgehende Zwischenschicht (5) ausgebildet ist, oder wobei die Zwischenschicht (5) mehrere voneinander getrennte Zwischenschichtflächen (5-2, 5-3, 5-4, 5-5a, 5-5b, 5-6a, 5-6b) aufweist, wobei die voneinander getrennten Zwischenschichtflächen (5-2, 5-3, 5-4, 5-5a, 5-5b, 5-6a, 5-6b), insbesondere eine erste Zwischenschichtfläche (5-2) umfasst, welche an dem ersten Dämpfungsunterbereich (3-3) befestigt ist, und/oder insbesondere eine zweite Zwischenschichtfläche (5-3) umfasst, welche an dem zweiten Dämpfungsunterbereich (3-4) befestigt ist, und/oder insbesondere eine dritte Zwischenschichtfläche (5-4) umfasst, welche an dem dritten, Dämpfungsunterbereich (3-5) befestigt ist, und/oder insbesondere eine vierte Zwischenschichtfläche (5-5a, 5,5b) umfasst welche an dem fünften Dämpfungsunterbereich (3-9) befestigt ist, und/oder insbesondere eine fünfte Zwischenschichtfläche (5-6a, 5-6b) umfasst welche an dem sechsten Dämpfungsunterbereich (3-10) befestigt ist.

13. Verfahren (10) zum Herstellen eines Fahrradsattels (1), wobei das Verfahren die folgenden Schritte umfasst:
- Bereitstellen (10-1) einer Mehrzahl von Tapeelementen (4, 4-3, 4-4, 4-5, 4-6, 4-7),
- Automatisiertes Anbringen (10-2), insbesondere durch einen Roboter, der Mehrzahl von Tapeelementen (4, 4-3, 4-4, 4-5, 4-6, 4-7) auf einer Dämpfungsschicht (3) eines Fahrradsattels (1), wobei die Dämpfungsschicht (3) ein elastisches Material umfasst, welches ausgebildet ist, auf den Fahrradsattel (1) wirkende Kräfte durch eine Verformung des elastischen Materials aufzunehmen, wobei die Tapeelemente (4, 4-3, 4-4, 4-5, 4-6, 4-7) eine erste Gruppe von Tapeelementen (4, 4-3, 4-4, 4-5, 4-6, 4-7) mit einer ersten Steifigkeit umfassen, und wobei die Tapeelemente (4, 4-3, 4-4, 4-5, 4-6, 4-7) eine zweite Gruppe von Tapeelementen (4, 4-3, 4-4, 4-5, 4-6, 4-7) mit einer zweiten Steifigkeit umfassen, wobei die erste Steifigkeit größer als die zweite Steifigkeit ist, und
- Befestigen (10-3) der Dämpfungsschicht (3) auf einer Fahrradsattelschale (2) des Fahrradsattels (1), um den Fahrradsattel (1) herzustellen.

14. Verwendung von Tapeelementen (4, 4-3, 4-4, 4-5, 4-6, 4-7) zur ergonomischen Anpassung eines Fahrradsattels (1) an eine Anatomie eines Fahrradfahrers und zum Schutz eines elastischen Materials einer Dämpfungsschicht (3) des Fahrradsattels (1), wobei der Fahrradsattel (1) eine Fahrradsattelschale (2) und eine Dämpfungsschicht (3) aufweist, welche an der Fahrradsattelschale (2) befestigt ist, wobei die Dämpfungsschicht (3) ein elastisches Material umfasst, welches ausgebildet ist, auf den Fahrradsattel (1) wirkende Kräfte durch eine Verformung des elastischen Materials aufzunehmen, und wobei die Mehrzahl von Tapeelementen (4, 4-3, 4-4, 4-5, 4-6, 4-7) abschnittsweise an der Dämpfungsschicht (3) durch eine stoffschlüssige Verbindung befestigt sind, wobei die Tapeelemente (4, 4-3, 4-4, 4-5, 4-6, 4-7) eine erste Gruppe von Tapeelementen (4, 4-3, 4-4, 4-5, 4-6, 4-7) mit einer ersten Steifigkeit umfassen, und wobei die Tapeelemente (4, 4-3, 4-4, 4-5, 4-6, 4-7) eine zweite Gruppe von Tapeelementen (4, 4-3, 4-4, 4-5, 4-6, 4-7) mit einer zweiten Steifigkeit umfassen, wobei die erste Steifigkeit größer als die zweite Steifigkeit ist.

## Claims

1. A bicycle saddle (1) that can be fastened on a bicycle, comprising:
a bicycle saddle shell (2) and
a damping layer (3) that is fastened on the bicycle saddle shell (2), wherein the damping layer (3) comprises an elastic material that is designed for absorbing forces acting upon the bicycle saddle (1) by means of a deformation of the elastic material,
wherein the bicycle saddle (1) has a plurality of tape elements (4, 4-3, 4-4, 4-5, 4-6, 4-7) that are sectionally fastened on the damping layer (3) by means of an integral connection in order to ensure an ergonomic adaptation of the bicycle saddle (1) to an anatomy of a bicyclist and protection of the elastic material of the damping layer (3), as well as to compensate or cover its unevenness,
**characterized in that** the tape elements (4, 4-3, 4-4, 4-5, 4-6, 4-7) comprise a first group of tape elements (4, 4-3, 4-4, 4-5, 4-6, 4-7) with a first rigidity, and **in that** the tape elements (4, 4-3, 4-4, 4-5, 4-6, 4-7) comprise a second group of tape elements (4, 4-3, 4-4, 4-5, 4-6, 4-7) with a second rigidity, wherein the first rigidity is greater than the second rigidity.

2. The bicycle saddle (1) according to claim 1, wherein the tape elements (4, 4-3, 4-4, 4-5, 4-6, 4-7) are glued to the damping layer (3), particularly to a top side (3-1) and/or a layer edge (3-2) of the damping layer (3), particularly by means of a hot-melt adhesive.

3. The bicycle saddle (1) according to one of the preceding claims, wherein the tape elements (4, 4-3, 4-4, 4-5, 4-6, 4-7) respectively have a tape bottom side that faces the damping layer (3) and is integrally connected, particularly glued, to the damping layer (3), and wherein the tape elements (4, 4-3, 4-4, 4-5, 4-6, 4-7) respectively have a tape top side (4-2) that faces away from the damping layer (3).

4. The bicycle saddle (1) according to one of the preceding claims, wherein a tape top side (4-2) of the tape elements (4, 4-3, 4-4, 4-5, 4-6, 4-7), which faces away from the damping layer (3), has an at least sectionally roughened surface structure in order to impede slippage of the buttocks of the bicyclist off the tape top side (4-2).

5. The bicycle saddle (1) according to one of the preceding claims, wherein the damping layer (3) comprises a first damping subregion (3-3), particularly a first rear damping subregion, and a second damping subregion (3-4), particularly a second rear damping subregion, and wherein the tape elements (4, 4-3, 4-4) are fastened on the first and/or second damping subregion (3-3, 3-4).

6. The bicycle saddle (1) according to one of the preceding claims, wherein the damping layer (3) comprises a third damping subregion (3-5), particularly a saddle nose overlay element, which particularly is spaced apart from the first and/or second damping subregion (3-3, 3-4), particularly the first and/or second rear damping subregion (3-3, 3-4), and wherein the tape elements (4, 4-3, 4-4, 4-5, 4-6, 4-7) particularly are not fastened on the third damping subregion (3-5), particularly the saddle nose overlay element.

7. The bicycle saddle (1) according to claim 5 or 6, wherein the damping layer (3) comprises a fourth damping subregion (3-6), particularly a coccyx damping region, which extends between the first and the second damping subregion (3-3, 3-4), and wherein the tape elements (4, 4-5) are fastened on the fourth damping subregion (3-6).

8. The bicycle saddle (1) according to one of the preceding claims, wherein the damping layer (3) comprises a fifth damping subregion (3-9), particularly a fifth central damping subregion (3-9), and a sixth damping subregion (3-10), particularly a sixth central damping subregion (3-10), wherein the fifth damping subregion (3-9) particularly extends from the first damping subregion (3-3), particularly the first rear damping subregion (3-1), to the third damping subregion (3-5), particularly the saddle nose overlay element, wherein the sixth damping subregion (3-10) particularly extends from the second damping subregion (3-4), particularly the second rear damping subregion (3-2), to the third damping subregion (3-5), particularly the saddle nose overlay element, and wherein the tape elements (4, 4-6, 4-7) are fastened on the fifth and/or sixth damping subregion (3-9, 3-10).

9. The bicycle saddle (1) according to one of the preceding claims, wherein the damping layer (3) comprises a recess (3-8), particularly a pubic bone recess or perineum recess, which particularly is arranged between the first, second, third, fourth, fifth and/or sixth damping subregion (3-3, 3-4, 3-5, 3-6, 3-9, 3-10), wherein the tape elements (4, 4-3, 4-4, 4-5, 4-6, 4-7) particularly are not fastened in the recess (3-8), particularly the pubic bone recess or perineum recess.

10. The bicycle saddle (1) according to one of the preceding claims, furthermore comprising at least one intermediate layer (5) that is at least sectionally arranged between the damping layer (3) and the tape elements (4, 4-3, 4-4, 4-5, 4-6, 4-7), wherein the intermediate layer (5) particularly is integrally connected to the damping layer (3), and wherein the tape elements (4, 4-3, 4-4, 4-5, 4-6, 4-7) particularly are integrally connected to the intermediate layer (5).

11. The bicycle saddle (1) according to claim 10, wherein the intermediate layer (5) is fastened on the first, second, third, fourth, fifth and/or sixth damping subregion (3-3, 3-4, 3-5, 3-6, 3-9, 3-10), and wherein the intermediate layer (5) particularly is not fastened on the recess (3-8).

12. The bicycle saddle (1) according to claim 10 or 11, wherein the intermediate layer (5) is realized in the form of a continuous intermediate layer (5) or wherein the intermediate layer (5) has multiple intermediate layer surfaces (5-2, 5-3, 5-4, 5-5a, 5-5b, 5-6a, 5-6b) that are separated from one another, wherein the separated intermediate layer surfaces (5-2, 5-3, 5-4, 5-5a, 5-5b, 5-6a, 5-6b) particularly comprise a first intermediate layer surface (5-2) that is fastened on the first damping subregion (3-3) and/or particularly comprise a second intermediate layer surface (5-3) that is fastened on the second damping subregion (3-4) and/or particularly comprise a third intermediate layer surface (5-4) that is fastened on the third damping subregion (3-5) and/or particularly comprise a fourth intermediate layer surface (5-5a, 5, 5b) that is fastened on the fifth damping subregion (3-9) and/or particularly comprise a fifth intermediate layer surface (5-6a, 5-6b) that is fastened on the sixth damping subregion (3-10).

13. A method (10) for producing a bicycle saddle (1), wherein the method comprises the following steps:
providing (10-1) a plurality of tape elements (4, 4-3, 4-4, 4-5, 4-6, 4-7),
- attaching (10-2) the plurality of tape elements (4, 4-3, 4-4, 4-5, 4-6, 4-7) to a damping layer (3) of a bicycle saddle (1) in an automated manner, particularly by means of a robot, wherein the damping layer (3) comprises an elastic material that is designed for absorbing forces acting upon the bicycle saddle (1) by means of a deformation of the elastic material, wherein the tape elements (4, 4-3, 4-4, 4-5, 4-6, 4-7) comprise a first group of tape elements (4, 4-3, 4-4, 4-5, 4-6, 4-7) with a first rigidity, wherein the tape elements (4, 4-3, 4-4, 4-5, 4-6, 4-7) comprise a second group of tape elements (4, 4-3, 4-4, 4-5, 4-6, 4-7) with a second rigidity, and wherein the first rigidity is greater than the second rigidity, and
- fastening (10-3) the damping layer (3) on a bicycle saddle shell (2) of the bicycle saddle (1) in order to produce the bicycle saddle (1).

14. A use of tape elements (4, 4-3, 4-4, 4-5, 4-6, 4-7) for ergonomically adapting a bicycle saddle (1) to an anatomy of a bicyclist and for protecting an elastic material of a damping layer (3) of the bicycle saddle (1), wherein the bicycle saddle (1) has a bicycle saddle shell (2) and a damping layer (3) that is fastened on the bicycle saddle shell (2), wherein the damping layer (3) comprises an elastic material that is designed for absorbing forces acting upon the bicycle saddle (1) by means of a deformation of the elastic material, wherein the plurality of tape elements (4, 4-3, 4-4, 4-5, 4-6, 4-7) is sectionally fastened on the damping layer (3) by means of an integral connection, wherein the tape elements (4, 4-3, 4-4, 4-5, 4-6, 4-7) comprise a first group of tape elements (4, 4-3, 4-4, 4-5, 4-6, 4-7) with a first rigidity, wherein the tape elements (4, 4-3, 4-4, 4-5, 4-6, 4-7) comprise a second group of tape elements (4, 4-3, 4-4, 4-5, 4-6, 4-7) with a second rigidity, and wherein the first rigidity is greater than the second rigidity.

## Revendications

1. Selle de bicyclette (1), laquelle est susceptible d'être fixée sur une bicyclette, comprenant :
une coque de selle (2) de bicyclette et
une couche d'amortissement (3), laquelle est fixée sur la coque de selle (2) de bicyclette, la couche d'amortissement (3) comprenant une matière élastique, laquelle est conçue pour absorber par une déformation de la matière élastique des forces agissant sur la selle de bicyclette (1),
la selle de bicyclette (1) comportant une pluralité d'éléments de bandes (4, 4-3, 4-4, 4-5, 4-6, 4-7), lesquels sont fixés par endroits sur la couche d'amortissement (3) par une liaison par conjugaison de matières, pour assurer une adaptation ergonomique de la selle de bicyclette (1) à une anatomie d'un cycliste et une protection de la matière élastique de la couche d'amortissement (3), ainsi que pour compenser ou masquer ses aspérités,
**caractérisée en ce que** les éléments de bandes (4, 4-3, 4-4, 4-5, 4-6, 4-7) comprennent un premier groupe d'éléments de bandes (4, 4-3, 4-4, 4-5, 4-6, 4-7) faisant preuve d'une première rigidité et **en ce que** les éléments de bandes (4, 4-3, 4-4, 4-5, 4-6, 4-7) comprennent un deuxième groupe d'éléments de bandes (4, 4-3, 4-4, 4-5, 4-6, 4-7) faisant preuve d'une deuxième rigidité, la première rigidité étant supérieure à la deuxième rigidité.

2. Selle de bicyclette (1) selon la revendication 1, les éléments de bandes (4, 4-3, 4-4, 4-5, 4-6, 4- 7) étant collés, notamment par un adhésif thermofusible avec la couche d'amortissement (3), notamment par une face supérieure (3-1) et / ou un bord de couche (3-2) de la couche d'amortissement (3).

3. Selle de bicyclette (1) selon l'une quelconque des revendications précédentes, les éléments de bandes (4, 4-3, 4-4, 4-5, 4-6, 4-7) comportant chacun une face inférieure de bande dirigée vers la couche d'amortissement (3), laquelle est reliée par conjugaison de matières, notamment collée avec la couche d'amortissement (3) et les éléments de bandes (4, 4-3, 4-4, 4-5, 4-6, 4-7) comportant chacun une face supérieure de bande (4-2), laquelle est opposée à la couche d'amortissement (3).

4. Selle de bicyclette (1) selon l'une quelconque des revendications précédentes, une face supérieure de bande (4-2) opposée à la couche d'amortissement (3) des éléments de bandes (4, 4-3, 4- 4, 4-5, 4-6, 4-7) comportant une structure superficielle rugosifiée au moins par endroits, pour compliquer un glissement du fessier du cycliste de la face supérieure de bande (4-2).

5. Selle de bicyclette (1) selon l'une quelconque des revendications précédentes, la couche d'amortissement (3) comportant une première sous-zone d'amortissement (3-3), notamment une première sous-zone d'amortissement arrière, et une deuxième sous-zone d'amortissement (3-4), notamment une deuxième sous-zone d'amortissement arrière, et les éléments de bandes (4, 4-3, 4-4), étant fixés sur la première et / ou sur la deuxième sous-zone d'amortissement (3-3, 3-4).

6. Selle de bicyclette (1) selon l'une quelconque des revendications précédentes, la couche d'amortissement (3) comportant une troisième sous-zone d'amortissement (3-5), notamment un élément d'appui de bec de selle, lequel est espacé de la première et / ou de la deuxième sous-zone d'amortissement (3-3, 3-4), notamment de la première et / ou de la deuxième sous-zone d'amortissement (3-3, 3-4) arrière, les éléments de bandes (4, 4-3, 4-4, 4-5, 4-6, 4-7) n'étant notamment pas fixés sur la troisième sous-zone d'amortissement (3-5), notamment sur l'élément d'appui de bec de selle.

7. Selle de bicyclette (1) selon la revendication 5 ou 6, la couche d'amortissement (3) comprenant une quatrième sous-zone d'amortissement (3-6), notamment une zone d'amortissement pour le coccyx, laquelle s'étend entre la première et la deuxième sous-zone d'amortissement (3- 3, 3-4) et les éléments de bandes (4, 4-5) étant fixés sur la quatrième sous-zone d'amortissement (3-6).

8. Selle de bicyclette (1) selon l'une quelconque des revendications précédentes, la couche d'amortissement (3) comprenant une cinquième sous-zone d'amortissement (3-9), notamment une cinquième sous-zone d'amortissement (3-9) centrale et une sixième sous-zone d'amortissement (3-10), notamment une sixième sous-zone d'amortissement (3-10) centrale, la cinquième sous-zone d'amortissement (3-9) s'étendant notamment de la première sous-zone d'amortissement (3-3), notamment de la première sous-zone d'amortissement (3-1) arrière vers la troisième sous-zone d'amortissement (3-5), notamment l'élément d'appui de bec de selle et la sixième sous-zone d'amortissement (3-10) s'étendant notamment de la deuxième sous-zone d'amortissement (3-4), notamment de la deuxième sous-zone d'amortissement (3-2) arrière, vers la troisième sous-zone d'amortissement (3-5), notamment l'élément d'appui de bec de selle et les éléments de bandes (4, 4-6, 4-7) étant fixés sur la cinquième et / ou la sixième sous-zone d'amortissement (3-9, 3-10).

9. Selle de bicyclette (1) selon l'une quelconque des revendications précédentes, la couche d'amortissement (3) comprenant un évidement (3-8), notamment un évidement pour l'articulation pubienne ou un évidement pour le périnée, lequel est placé notamment entre la première, la deuxième, la troisième, la quatrième, la cinquième et / ou la sixième sous-zone d'amortissement (3-3, 3-4, 3-5, 3-6, 3-9, 3-10), les éléments de bandes (4, 4-3, 4-4, 4-5, 4-6, 4-7) n'étant notamment pas fixés dans l'évidement (3-8), notamment dans l'évidement pour l'articulation pubienne ou dans l'évidement pour le périnée.

10. Selle de bicyclette (1) selon l'une quelconque des revendications précédentes, comprenant par ailleurs au moins une couche intermédiaire (5), laquelle est placée au moins par endroits entre la couche d'amortissement (3) et les éléments de bandes (4, 4-3, 4-4, 4-5, 4-6, 4-7), la couche intermédiaire (5) étant notamment reliée par conjugaison de matières, notamment avec la couche d'amortissement (3) et les éléments de bandes (4, 4-3, 4-4, 4-5, 4-6, 4-7) étant reliés par conjugaison de matières notamment avec la couche intermédiaire (5).

11. Selle de bicyclette (1) selon la revendication 10, la couche intermédiaire (5) étant fixée sur la première, la deuxième, la troisième, la quatrième, la cinquième et / ou la sixième sous-zone d'amortissement (3-3, 3-4, 3-5, 3-6, 3-9, 3-10), la couche intermédiaire (5) n'étant notamment pas fixée sur l'évidement (3-8).

12. Selle de bicyclette (1) selon la revendication 10 ou 11, la couche intermédiaire (5) étant conçue sous la forme d'une couche intermédiaire (5) continue, ou la couche intermédiaire (5) comportant plusieurs surfaces (5-2, 5-3, 5-4, 5-5a, 5-5b, 5-6a, 5-6b) de couche intermédiaire séparées les unes des autres, les surfaces (5-2, 5-3, 5-4, 5-5a, 5-5b, 5-6a, 5-6b), de couche intermédiaire séparées les unes des autres comprenant notamment une première surface (5-2) de couche intermédiaire, laquelle est fixée sur la première sous-zone d'amortissement (3-3) et / ou notamment une deuxième surface (5-3) de couche intermédiaire, laquelle est fixée sur la deuxième sous-zone d'amortissement (3-4) et / ou notamment une troisième surface (5-4) de couche intermédiaire, laquelle est fixée sur la troisième sous-zone d'amortissement (3-5) et / ou notamment une quatrième surface (5-5a, 5,5b) de couche intermédiaire, laquelle est fixée sur la cinquième sous-zone d'amortissement (3-9) et / ou notamment une cinquième surface (5-6a, 5-6b) de couche intermédiaire, laquelle est fixée sur la sixième sous-zone d'amortissement (3-10).

13. Procédé (10), destiné à fabriquer une selle de bicyclette (1), le procédé comprenant les étapes suivantes :
- la mise à disposition (10-1) d'une pluralité d'éléments de bandes (4, 4-3, 4-4, 4-5, 4-6, 4-7),
- l'application automatisée (10-2), notamment par un robot de la pluralité d'éléments de bandes (4, 4-3, 4-4, 4-5, 4-6, 4-7) sur une couche d'amortissement (3) d'une selle de bicyclette (1), la couche d'amortissement (3) comprenant une matière élastique, laquelle est conçue pour absorber par une déformation de la matière élastique des forces agissant sur la selle de bicyclette (1), les éléments de bandes (4, 4-3, 4-4, 4-5, 4-6, 4-7) comprenant un premier groupe d'éléments de bandes (4, 4-3, 4-4, 4-5, 4-6, 4-7) faisant preuve d'une première rigidité et les éléments de bandes (4, 4-3, 4-4, 4-5, 4-6, 4-7) comprenant un deuxième groupe d'éléments de bandes (4, 4-3, 4-4, 4-5, 4-6, 4-7) faisant preuve d'une deuxième rigidité, la première rigidité étant supérieure à la deuxième rigidité et
- la fixation (10-3) de la couche d'amortissement (3) sur une coque de selle (2) de bicyclette de la selle de bicyclette (1), pour fabriquer la selle de bicyclette (1).

14. Utilisation d'éléments de bandes (4, 4-3, 4-4, 4-5, 4-6, 4-7) pour l'adaptation ergonomique d'une selle de bicyclette (1) à une anatomie d'un cycliste et pour la protection d'une matière élastique d'une couche d'amortissement (3) de la selle de bicyclette (1), la selle de bicyclette (1) comportant une coque de selle (2) de bicyclette et une couche d'amortissement (3), laquelle est fixée sur la coque de selle (2) de bicyclette, la couche d'amortissement (3) comprenant une matière élastique, laquelle est conçue pour absorber des forces agissant sur la selle de bicyclette (1) par une déformation de la matière élastique et la pluralité d'éléments de bandes (4, 4-3, 4-4, 4-5, 4-6, 4-7) étant fixée par endroits sur la couche d'amortissement (3) par une liaison par conjugaison de matières, les éléments de bandes (4, 4-3, 4-4, 4-5, 4-6, 4-7) comprenant un premier groupe d'éléments de bandes (4, 4-3, 4-4, 4-5, 4-6, 4-7) faisant preuve d'une première rigidité et les éléments de bandes (4, 4-3, 4-4, 4-5, 4-6, 4-7) comprenant un deuxième groupe d'éléments de bandes (4, 4-3, 4-4, 4-5, 4-6, 4-7) faisant preuve d'une deuxième rigidité, la première rigidité étant supérieure à la deuxième rigidité.
